# EUROPEAN PATENT SPECIFICATION

(11) **EP 0 500 044 B1**
(45) Date of publication and mention of the grant of the patent: **23.04.1997**
(21) Application number: 92102679.5
(22) Date of filing: 18.02.1992
(51) Int. Cl.: G11B 7/26, G11B 20/18

(54) **Method and apparatus for recording information**
Verfahren und Vorrichtung zur Aufzeichnung von Information
Méthode et appareil pour l'enregistrement de l'information

(30) Priority: 20.02.1991 JP 25870/91
(43) Date of publication of application: 26.08.1992
(73) Proprietor: International Business Machines Corporation, Armonk, N.Y. 10504 (US); Mitsubishi Chemical Corporation, Chiyoda-ku Tokyo (JP)
(72) Inventor: Takeshima, Hideharu, Machida-shi, Tokyo (JP); Kitawaki, Kazuo, Machida-shi, Tokyo (JP)
(74) Representative: Goddar, Heinz J., Dr.

(56) References cited:
- EP-A- 0 077 642
- EP-A- 0 319 188
- WO-A-85/01382
- US-A- 3 851 306
- US-A- 4 145 758
- PATENT ABSTRACTS OF JAPAN vol. 10, no. 26 (P-425)31 January 1986 & JP-A-60 176 136

## Description

The present invention relates to a method and apparatus for recording information, and more particularly to a method and apparatus for correctly recording format information, data and the like on a master optical-disk stamper at the time of the fabrication of the master.

EP-A-0 319 188 discloses a fault tolerance apparatus for generating error correcting code (ECC) and, simultaneously therewith, checking the correctness of the generating, for blocks of data with which the error correcting code is associated and transmitted to a storage medium. The apparatus includes a pair of programmable control devices configured to selectively operate in one of two modes: The first mode in which data being transferred to the storage medium is monitored for generation of an ECC to be associated and stored with the data block, and the second mode in which the data being transferred is monitored for detecting errors that may be contained in the data. During data transmissions to the storage device, one of the control devices operates in the first mode, while the other control device operates in the second mode to check the operation of the first device. When data is retrieved from the storage device, both control device operate in the second mode to check the correctness of the data being transferred, and the operability of each other.

In EP-A-0 319 188 one of device control units generates ECC code to be added to the data transferred from CPU. In other words, ECC code is added to the data transferred from CPU at the device control module at the first time. Since EP-A-0 319 188 does not show that the CPU outputs data with ECC code, errors occurred in the data transfer between CPU and device controller on external bus, which is more sensitive to noise than an internal bus, cannot be detected.

JP-A-60 176 136 discloses a data recording method in a magnetic recording and reproducing device. An ECC circuit adds an ECC code to a transferred data from a high-order device and writes the result to a data buffer memory. A write data outputted from the memory is checked by a check circuit and also corrected by a correction circuit. The output data of the correction is fed to a write circuit at execution or write command, and after the data is written on a magnetic tape at each band, the data is read again and written while being subject to error check.

Since JP-A-60 176 136 does not show that the high-order device outputs data with ECC code, errors occurred in the data transfer between the high-order device and the magnetic recording and reproducing device on external bus, which is more sensitive to noise than internal bus, cannot be detected.

Redundant information is added to data recorded on compact disks, ROM disks, magneto-optical disks, or the like, so as to verify whether or not data recorded on a master has been properly read out. This redundant information consists of so-called error detection/correction codes which are generated in accordance with a fixed algorithm. These error detection/correction codes include an error detection code for detecting whether or not the reading of information from an optical disk manufactured on the basis of the master has been effected properly, as well as an error correction code for restructuring proper information on the basis of the redundant information in a case where part of the information is missing due to the adherence of dust or the like onto the optical disk. The error detection/correction codes are generated for each fixed amount of information on the basis of correct information and are, together with information, recorded onto the surface of the master. A method of recording information in accordance with the conventional art will be described by citing the process of manufacturing a ROM disk.

Information to be recorded, i.e., data, is recorded onto the surface of a large-capacity recording medium (storage medium) such as a hard disk or an optical disk. This data is arranged in accordance with a required format and is set as final data. The final data is transferred to a hard disk of a computer for laser exposure, by using an optical disk and data communication. Meanwhile, this data is recorded onto a recording medium such as an optical disk for the purpose of archival storage for a future occasion when laser exposure is again effected. When a glass master (recording medium) with a photoresist coated thereon is exposed to a laser beam, data recorded onto a recording medium such as the hard disk is read out and is transferred from a computer to a device called an encoder (format generator) via an interface such as a general-purpose interface bus (GP-IB). The encoder generates error detection/correction codes in real time on the basis of the transferred data, and adds the generated error detection/correction codes to the transferred data. At the same time, the encoder subjects the data to format conversion and modulates a laser beam, thereby recording the data and the error detection/correction codes onto the recording medium. Then, by using this glass master, replicas are manufactured in large volumes.

However, in a case where the error detection/correction codes are thus added, the apparatus becomes completely unprotected should an error occur during the transfer of data. In the case of a conventional apparatus, during the period when data is transferred to the encoder from the medium on which the data has been recorded, the process of reading out data from the recording medium and the process of transferring the data read out to the encoder are involved. During the period when the data is thus transferred from the recording medium to the encoder, however, data omissions, errors and the like can possibly occur, including errors in transmitted data due to the malfunctioning of an information processor or the mixing in of noise or the like. As such, even if the erroneous data is transferred to the encoder, on the encoder side, on an assumption that the data is correct, error detection/correction codes are generated, and the data and the error detection/correction codes are recorded onto the master through laser exposure. Consequently, there is a drawback in that erroneous data and erroneous error detection/correction codes are recorded onto the master.

Thus, since replicas are manufactured in large volumes from the master, there is the possibility of defective replicas being manufactured in large volumes unless errors are detected at the time of recording on the master.

### SUMMARY OF THE INVENTION

Accordingly, an object of the present invention is to provide a method and apparatus for recording information which are capable of improving yield by preventing a defective master from being fabricated, thereby overcoming the above-described drawback in the conventional art.

A method and an apparatus according to the present invention are defined in claims 1 and 10 respectively.

In the present invention, since data and the error detection/correction codes based on the data are transferred, and the data and the error detection/correction codes transferred are recorded onto a recording medium while error detection is being effected, it is possible to record only correct data and correct error detection/correction codes by confirming whether or not erroneous data has been transferred, and by retransferring the data or correcting the data. Accordingly, it is possible to prevent a defective master from being fabricated, so that yield improves.

In addition, in a case where data and error detection/correction codes based on the data are stored in a storage unit, and the stored content is read out and transferred, if the content is read from the storage unit while error detection is being effected, only the correct data and the correct error detection/correction codes can be read out and transferred.

As described above, in accordance with the present invention, since an error in the data transferred is detected before the data is recorded on a recording medium, it is possible to obtain an advantage in that only the correct data and the correct error detection/correction codes can be recorded. In addition, yield can be improved by preventing a defective master from being fabricated.

The above and other objects, features and advantages of the invention will become more apparent from the following detailed description of the invention when read in conjunction with the accompanying drawing.

### BRIEF DESCRIPTION OF THE DRAWING

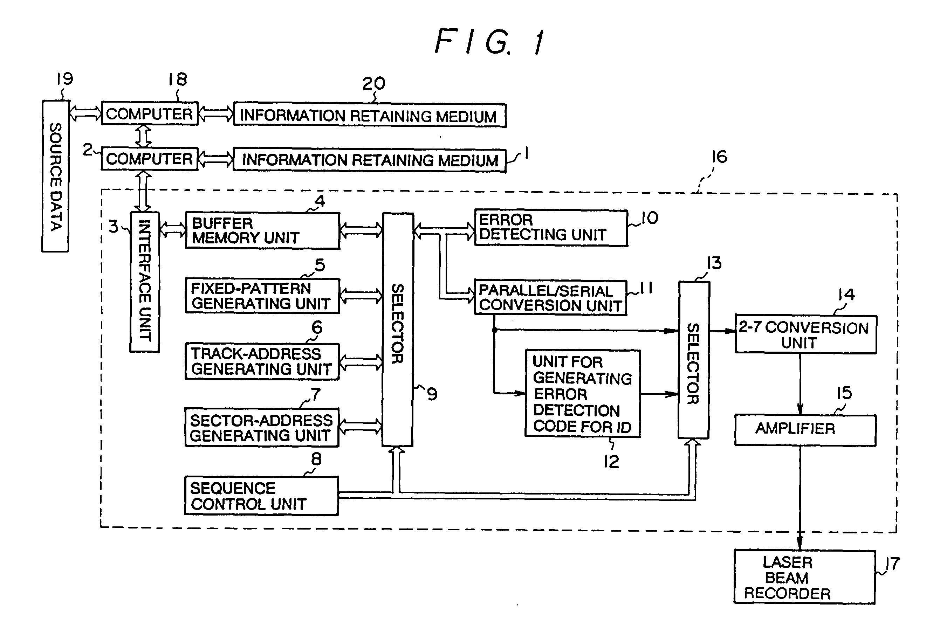

Fig. 1 is a block diagram of an embodiment of the present invention.

### DESCRIPTION OF THE PREFERRED EMBODIMENT

Referring now to the accompanying drawing, a detailed description will be given of a preferred embodiment of the present invention. Fig. 1 is a block diagram of an information recording apparatus to which a transfer method in accordance with the present invention is applied. First, a stamper and a glass master for manufacturing optical disks are provided with a preformat area onto which address data (IDs representing track numbers and sector numbers, error detection/correction codes for IDs, and the like) are recorded, as well as a data recording area in which user data and error detection/correction codes for the user data are recorded. This information recording apparatus records data, such as address data, onto the preformat area and the data recording area.

The information recording apparatus shown in Fig. 1 comprises a readout computer 18 for reading out source data 19 which is user data; a computer 2 for laser exposure; an information retaining medium 20 connected to the computer 18; an information retaining medium 1 connected to the computer 2; and a format generator (recorder) 16. The format generator 16 has an interface unit 3 connected to the computer 2. A signal generating section of the format generator 16 comprises a buffer memory unit 4 which receives data from the interface unit 3 and temporarily stores the data; a fixed-pattern generating unit 5 for generating fixed patterns such as a center mark and a pattern of a variable frequency oscillator (VFO); a track-address generating unit 6 for generating a track number, and a sector-address generating unit 7 for generating a sector number.

The signal generating section of the format generator 16 is connected to a selector 9. Also connected to the selector 9 are an error detecting unit 10 for detecting a data error and a parallel/serial conversion unit 11 for converting a parallel signal to a serial signal. The parallel/serial conversion unit 11 is directly connected to a selector 13, and is also connected to the selector 13 via a unit 12 for generating an error detection code for an ID. The selector 13 is connected to a laser beam recorder 17 via a 2-7 conversion unit 14 for converting a 1-bit serial signal to a 2-bit parallel signal and an amplifier 15. The changeover of the selectors 9 and 13 is controlled by a sequence control unit 8.

The operation of this embodiment will be described hereafter. The source data 19 to be recorded has been stored on an optical disk, tape, or the like. This source data 19 is read out by using the readout computer 18, and the data arrangement and the like are converted in accordance with a required format. The converted data is recorded onto the information retaining medium 20. At this time, error detection/correction codes are generated for each fixed amount of data by means of software or hardware, and the error detection/correction codes together with the data are recorded onto the information retaining medium 20. Both the converted data and the generated error detection/correction codes are transferred to computer 2 for laser exposure.

The computer 2 for laser exposure detects data error by using the error detection/correction codes transferred thereto so as to verify the validity of the transferred data. The following two methods can be used as the error detection method for verifying the validity of the data transferred at this time.
(1) Detection/correction codes are generated again from the transmitted data. A comparison is made between the regenerated error detection/correction codes and the error detection/correction codes transferred together with the data, so as to detect an error. In this case, if the transferred error detection/correction codes and the regenerated error detection/correction codes do not agree with each other, it means that an error has occurred.
(2) Error detection is carried out by means of a calculation using the error detection/correction codes transferred together with the data.

If the occurrence of an error is detected in the above-mentioned methods (1) and (2), the data may be corrected by retransferring the data, or the data may be corrected by using the error detection/correction codes added to the data.

The data for which error detection has been effected and whose error has been corrected is recorded, together with the error detection/correction codes for retention, onto the information retaining medium 1. As for the error detection/correction codes for retention, the error detection/correction codes transferred from the computer 18 may be used as it is, or error detection/correction codes newly generated on the basis of correct data may be used.

The data and the error detection/correction codes recorded onto the information retaining medium 1 are read out from the information retaining medium 1 by the computer 2, are sent to the format generator 16, and are temporarily stored in the buffer memory unit 4 via the interface unit 3. During this readout, an error in the readout data is detected by the methods (1) and (2) described above by using the error detection/correction codes, and if an error is detected, error correction is effected, as described above.

The sequence control unit 8 controls the selector 9 to sequentially change over the fixed-pattern generating unit 5, the track-address generating unit 6, the sector-address generating unit 7, and the buffer memory unit 4 in accordance with a predetermined sequence. If the buffer memory unit 4 is selected by the selector 9, the data and the error detection/correction codes stored in the buffer memory unit 4 are outputted simultaneously to the error detecting unit 10 and the parallel/serial conversion unit 11. By using the error detection/correction codes transmitted thereto, the error detecting unit 10 checks whether or not an error has occurred in the transferred data, using methods similar to the methods (1) and (2) described above. If an error is detected at this stage, the apparatus is normally stopped; however, the data may be corrected in real time by using the error detection/correction codes. Alternatively, the data may be corrected by retransferring the data. The correct data and error detection/correction codes are introduced to the parallel/serial conversion unit 11. The error detection/correction codes at this time are used for recording, and as the error detection/correction codes for recording, the error detection/correction codes transferred from the buffer memory unit 4 may be used as they are, but error detection/correction codes generated newly on the basis of correct data may be alternatively used.

The data and the error detection/correction codes introduced to the parallel/serial conversion unit 11 are converted to serial data and sent to the selector 13. In a case where the data outputted from the parallel/serial conversion unit 11 is ID data, a cyclic redundancy code (CRC) is added to the ID data in the unit 12 for generating an error detection code for an ID, and is sent to the selector 13. The data and the error detection/correction codes outputted by the parallel/serial conversion unit 11 as well as the data and the error detection/correction codes outputted by the unit 12 for generating an error detection code for an ID are sent to the conversion unit 14 while being changed over. The conversion unit 14 effects 2-7 conversion and generates bit trains to be actually recorded onto the glass master. The data and the error detection/correction codes therefor and the ID data and the error detection code therefor, which have been subjected to 2-7 conversion, are outputted to the laser beam recorder 17 via the amplifier 15. Then, as the laser beam is turned on and off with respect to the glass master with a photoresist coated thereon, a latent image is recorded in the photoresist.

As this glass master is subjected to development, small pits are formed in the photoresist. Meanwhile, a stamper which has exactly reproduced the pits is fabricated by means of sputtering and electroforming. Forming is effected by using this stamper, so as to manufacture large volumes of disks called replicas. Furthermore, a reflective film is formed on each of the disks, thereby forming ROM disks.

In addition, even in a case where the ROM disks are manufactured again, the data and the error detection/correction codes stored in the information retaining medium 1 are read out, and a check is made on whether or not there is any error in the data read out, such as an omission and damage, by using the error detection/correction codes before they are transferred to the interface unit. Accordingly, omission or the like of data due to a change over time can be prevented.

In accordance with this embodiment, when error detection/correction codes are added to binary information data to be recorded, which has been stored in the information retaining unit, and the data and the error detection/correction codes are subjected to format conversion in real time so as to record information on a recording medium by means of a light beam such as a laser beam, the error detection/correction codes are added in advance at a stage close to the original data. Reading from the information retaining unit is effected while error detection is being conducted. Recording onto a recording medium is effected while error detection is being conducted. Accordingly, it is readily possible to detect data error occurring during the reading of the data and during data transfer. Hence, it is possible to prevent a defective master using erroneous data from being fabricated, so that an improvement in yield is effected.

In addition, in the retention of data for future laser exposure or the like, a multiplicity of retaining media need_ not be used as a measure for possible damage to data. Hence, improved efficiency in the retention of data can be expected.

## Claims

1. An information recording method for recording data and error detection and correction codes onto a recording medium, comprising the steps of:
a) reading out source data (19), generating error detection and correction codes for the data, which codes are the same as the codes to be recorded in step (c);
b) transferring the data and the error detection and correction codes to a receiving computer (2);
c) recording the data and the error detection and correction codes transferred to the receiving computer onto the recording medium while error detection is being effected.

2. An information recording method according to claim 1, wherein in step (c), the data and the error detection and correction codes transferred are recorded onto the recording medium while both error detection and error correction are being effected.

3. An information recording method according to claim 2, wherein in step (c) when an error is detected, the data and the error detection and correction codes based on the data are retransferred to correct the error.

4. An information recording method according to claim 2, wherein in step (c), when an error is detected, the error is corrected by using the error correction code of the error detection and correction codes.

5. An information recording method according to claim 1, wherein the data and the error detection and correction codes are stored in advance in a retaining unit (1, 20) and wherein, in step (b), a stored content is read out while error detection or both error detection and error correction are being effected, and the data and the error detection and correction codes based on the data are transferred.

6. An information recording method according to claim 1, wherein, the data and the error detection and correction codes are stored in advance in a retaining unit (1, 20) and wherein, in step (b), the data is read out while both error detection and error correction are being effected, new error detection and correction codes which will be recorded onto the recording medium in step (c) are generated on the basis of the data read out, and the data read out and the new error detection and correction codes generated are transferred.

7. An information recording method according to claim 1, wherein step (c) is executed by a recording apparatus (16) for recording the data and the error detection and correction codes onto the recording medium.

8. An information recording method according to claim 1, wherein step (c) is executed by an apparatus (16) to which the data and the error detection and correction codes based on the data are transferred from a recording medium (1) for retention.

9. An information recording method according to claim 1, wherein, in step (c), recording is stopped when an error is detected.

10. An information recording apparatus for recording data and error detection and correction codes onto a recording medium, comprising:
a first transfer computer (18) for reading out source data (19), for generating error detection/correction codes for the data, which codes are the same as the codes to be recorded onto the recording medium, and for transferring the data and the error detection and correction codes generated to second transfer computer (2);
said second transfer computer (2) for correcting an error in the transferred data by detecting the error by using the transferred error detection and correction codes, for storing the corrected data and the error detection and correction codes and for reading and transferring the data and the error detection and correction codes stored to error detecting means (10);
said error detecting means for detecting an error in the data transferred from said second transfer computer (2); and
recording means for recording onto the recording medium the data and the error detection and correction codes transferred from said second transfer computer (2) while error detection is being effected.

11. An information recording apparatus according to claim 10, wherein said error detecting means (10) stops recording by said recording means when an error is detected.

12. An information recording apparatus according to claim 10, wherein said error detecting means (10) corrects an error in the data when the error is detected.

13. An information recording apparatus according to claim 10, wherein, when an error is detected, said first transfer computer (18) retransfers the data and the error detection and correction codes to said second transfer computer (2).

14. An information recording apparatus according to claim 10, wherein said second transfer computer (2) reads out the data and the error detection and correction codes stored therein while effecting error detection and error correction.

15. An information recording apparatus according to claim 10, wherein said second transfer computer (2) reads out the data and the error detection and correction codes stored therein while effecting error detection and error correction by using the error detection and correction codes stored therein, and said second transfer computer (2) generates new error detection and correction codes which are the same as the code to be recorded onto the recording medium on the basis of the data read out, and transfers the data read out and the new error detection and correction codes generated.

## Patentansprüche

1. Verfahren zum Aufzeichnen einer Information für Aufzeichnungsdaten und Fehlererkennungs- und Korrektur-Codes auf ein Aufzeichnungsmedium, mit den folgenden Schritten:
a) Auslesen von Quellendaten (19), die die Fehler- und Korrektur-Codes für die Daten erzeugen, wobei die Codes dieselben Codes sind, die in dem Schritt (c) aufgezeichnet worden sind;
b) Übertragen der Daten und der Fehlererkennungs- und Korrektur-Codes auf einen aufnehmenden Rechner (2);
c) Aufzeichnen der Daten und der Fehlererkennungs- und Korrektur-Codes, die auf den empfangenden Rechner übertragen worden sind, auf das Aufzeichnungsmedium, während die Fehlererkennung ausgeführt wird.

2. Ein Verfahren zum Aufzeichnen von Information nach Anspruch 1, wobei in dem Schritt (c) die Daten und die Fehlererkennungs- und Korrektur-Codes, die übertragen worden sind, auf dem Aufzeichnungsmedium aufgezeichnet werden, während sowohl die Fehlererkennung als auch die Fehlerkorrektur bewirkt werden.

3. Ein Verfahren zum Aufzeichnen von Information nach Anspruch 2, wobei in dem Schritt (c) dann, wenn ein Fehler erkannt wird, die Daten und die Fehlererkennungs- und Korrektur-Codes, die auf den Daten basieren, übertragen werden, um den Fehler zu korrigieren.

4. Ein Verfahren zum Aufzeichnen von Information nach Anspruch 2, wobei in dem Schritt (c) dann, wenn ein Fehler erkannt worden ist, der Fehler unter Verwendung des Korrektur-Codes des Fehlererkennungs- und Korrektur-Codes korrigiert wird.

5. Ein Verfahren zum Aufzeichnen von Information nach Anspruch 1, wobei die Daten und die Fehlererkennungs- und Korrektur-Codes zuvor in einer Aufnahmeeinheit (1, 20) gespeichert werden, und wobei in dem Schritt (b) ein gespeicherter Inhalt ausgelesen wird, während sowohl die Fehlererkennung als auch die Fehlerkorrektur ausgeführt werden und die Daten und die Fehlererkennungs- und Korrektur-Codes basierend auf den Daten übertragen werden.

6. Ein Verfahren zum Aufzeichnen einer Information nach Anspruch 1, wobei die Daten und die Fehlererkennungs- und Korrektur-Codes zuvor in einer Aufnahmeeinheit (1, 20) gespeichert werden, und wobei in dem Schritt (b) die Daten ausgelesen werden, während sowohl die Fehlererkennung als auch die Fehlerkorrektur ausgeführt werden, neue Fehlererkennungs- und Korrektur-Codes, die in dem Schritt (c) auf das Aufzeichnungsmedium aufgezeichnet worden sind, auf der Grundlage der ausgelesenen Daten erzeugt werden und die erzeugten neuen Fehlererkennungs- und Korrektur-Codes übertragen werden.

7. Ein Verfahren zum Aufzeichnen einer Information nach Anspruch 1, wobei der Schritt (c) von einem Aufzeichnungsapparat (16) zum Aufzeichnen der Daten und der Fehlererkennungs- und Korrektur-Codes auf das Aufzeichnungsmedium ausgeführt werden.

8. Ein Verfahren zum Aufzeichnen einer Information nach Anspruch 1, wobei der Schritt (c) von einem Apparat (16) ausgeführt wird, auf den die Daten und die auf den Daten basierenden Fehlererkennungs- und Korrektur-Codes von einem Aufzeichnungsmedium (1) zur Erhaltung aufgezeichnet werden.

9. Ein Verfahren zum Aufzeichnen einer Information nach Anspruch 1, wobei in dem Schritt (c) das Aufzeichnen beendet wird, wenn ein Fehler erkannt worden ist.

10. Eine Informationsaufzeichnungseinrichtung zum Aufzeichnen von Daten und Fehlererkennungs- und Korrektur-Codes auf ein Aufzeichnungsmedium mit:
einem ersten Übertragungscomputer (18) zum Ausschreiben von Quellendaten (19) zum Erzeugen von Fehlererkennungs/Korrektur-Codes für die Daten, wobei die Codes dieselben sind wie die Codes, die auf das Aufzeichnungsmedium aufgezeichnet worden sind und zum Übertragen der Daten und der erzeugten Fehlererkennungs- und Korrektur-Codes auf einen zweiten Übertragungsrechner (2);
wobei der zweite Übertragungsrechner (2) zum Korrigieren eines Fehlers in den übertragenen Daten durch Erkennung des Fehlers durch die Verwendung der übertragenen Fehlererkennungs- und Korrektur-Codes zum Speichern der Korrekturdaten und der Fehlererkennungs- und Korrektur-Codes und zum Lesen und Übertragen der Daten und der Fehlererkennungs- und Korrektur-Codes, die in dem Fehlererkennungsmittel (10) gespeichert sind;
Fehlererkennungsmitteln zum Erkennen eines Fehlers in den von den zweiten Übertragungsrechner (2) übertragenen Daten; und
Aufzeichnungsmitteln zum Aufzeichnen der Daten und der Fehlererkennungs- und Korrektur-Codes, die von dem zweiten Übertragungsrechner (2) übertragen worden sind, auf das Aufzeichnungsmedium, während die Fehlererkennung bewirkt wird.

11. Eine Informationsaufzeichnungsvorrichtung nach Anspruch 10, wobei das Fehlererkennungsmittel (10) das Aufzeichnen durch das Aufzeichnungsmittel stoppt, wenn ein Fehler erkannt worden ist.

12. Eine Informationsaufzeichnungsvorrichtung nach Anspruch 10, wobei das Fehlererkennungsmittel (10) einen Fehler in den Daten korrigiert, wenn der Fehler erkannt worden ist.

13. Eine Informationsaufzeichnungsvorrichtung nach Anspruch 10, wobei dann, wenn ein Fehler erkannt worden ist, der erste Übertragungsrechner (18) die Daten und die Fehlererkennungs- und Korrektur-Codes auf den zweiten Übertragungsrechner (2) rücküberträgt.

14. Eine Informationsaufzeichnungsvorrichtung nach Anspruch 10, wobei der zweite Übertragungsrechner (2) die Daten und die Fehlererkennungs- und Korrektur-Codes, die in diesem gespeichert sind, ausliest, während die Fehlererkennung und die Fehlerkorrektur ausgeführt werden.

15. Eine Informationsaufzeichnungsvorrichtung nach Anspruch 10, wobei der zweite Übertragungsrechner (2) die Daten und die Fehlererkennungs- und Korrektur-Codes, die in diesem gespeichert sind, ausliest, während die Fehlererkennung und die Fehlerkorrektur unter Verwendung der in diesen gespeicherten Fehlererkennungs- und Korrektur-Codes ausgeführt wird und wobei der zweite Übertragungsrechner (2) neue Fehlererkennungs- und Korrektur-Codes erzeugt, die dieselben sind wie die Codes, die auf dem Aufzeichnungsmedium auf der Grundlage der ausgelesenen Daten abgespeichert worden sind, und die ausgelesenen Daten und die erzeugten neuen Fehlererkennungs-Korrektur-Codes überträgt.

## Revendications

1. Procédé d'enregistrement d'informations pour enregistrer des données et des codes de détection et de correction d'erreur sur un support d'enregistrement, comprenant les étapes de :
a) extraction des données de source (19), génération de codes de détection et de correction d'erreur pour les données, lesquels codes sont les mêmes que les codes à enregistrer à l'étape (c) ;
b) transfert des données et des codes de détection et de correction d'erreur à un ordinateur de réception (2) ;
c) enregistrement des données et des codes de détection et de correction d'erreur transférés à l'ordinateur de réception sur le support d'enregistrement alors qu'une détection d'erreur est effectuée.

2. Procédé d'enregistrement d'informations selon la revendication 1, dans lequel dans l'étape (c), les données et les codes de détection et de correction d'erreur transférés sont enregistrés sur le support d'enregistrement alors qu'à la fois une détection d'erreur et une correction d'erreur sont effectuées.

3. Procédé d'enregistrement d'informations selon la revendication 2, dans lequel dans l'étape (c) lorsqu'une erreur est détectée, les données et les codes de détection et de correction d'erreur sur la base des données sont retransférés pour corriger l'erreur.

4. Procédé d'enregistrement d'informations selon la revendication 2, dans lequel dans l'étape (c), lorsqu'une erreur est détectée, l'erreur est corrigée en utilisant le code de correction d'erreur des codes de détection et de correction d'erreur.

5. Procédé d'enregistrement d'informations selon la revendication 1, dans lequel les données et les codes de détection et de correction d'erreur sont stockés à l'avance dans une unité de conservation (1, 20) et dans lequel, dans l'étape (b), un contenu stocké est extrait alors qu'une détection d'erreur ou à la fois une détection d'erreur et une correction d'erreur sont effectuées, et les données et les codes de détection et de correction d'erreur sur la base des données sont transférés.

6. Procédé d'enregistrement d'informations selon la revendication 1, dans lequel, les données et les codes de détection et de correction d'erreur sont stockés à l'avance dans une unité de conservation (1, 20) et dans l'étape (b), les données sont extraites alors qu'à la fois une détection d'erreur et une correction d'erreur sont effectuées, de nouveaux codes de détection et de correction d'erreurs qui seront enregistrés sur le support d'enregistrement à l'étape (c) sont générés sur la base des données extraites, et les données extraites et les nouveaux codes de détection et de correction d'erreur générés sont transférés.

7. Procédé d'enregistrement d'informations selon la revendication 1, dans lequel l'étape (c) est exécutée par un appareil d'enregistrement (16) pour enregistrer les données et les codes de détection et de correction d'erreur sur le support d'enregistrement.

8. Procédé d'enregistrement d'informations selon la revendication 1, dans lequel l'étape (c) est exécutée par un appareil (16) auquel les données et les codes de détection et de correction d'erreur sur la base des données sont transférés à partir d'un support d'enregistrement (1) pour une conservation.

9. Procédé d'enregistrement d'informations selon la revendication 1, dans lequel, dans l'étape (c), l'enregistrement est arrêté lorsqu'une erreur est détectée.

10. Appareil d'enregistrement d'informations pour enregistrer des données et des codes de détection et de correction d'erreur sur un support d'enregistrement, comprenant :
un premier ordinateur de transfert (18) pour extraire des données de source (19), pour générer des codes de détection et de correction d'erreur pour les données, lesquels codes sont les mêmes que les codes à enregistrer sur le support d'enregistrement, et pour transférer les données et les codes de détection et de correction d'erreur générés au second ordinateur de transfert (2) ;
ledit second ordinateur de transfert (2) pour corriger une erreur dans les données transférées en détectant l'erreur en utilisant les codes de détection et de correction d'erreur transférés, pour stocker les données corrigées et les codes de détection et de correction d'erreur et pour lire et transférer les données et les codes de détection et de correction d'erreur stockés, au moyen de détection d'erreur (10) ;
ledit moyen de détection d'erreur pour détecter une erreur dans les données transférées dudit second ordinateur de transfert (2) ; et
un moyen d'enregistrement pour enregistrer sur le support d'enregistrement les données et les codes de détection et de correction d'erreur transférés à partir dudit second ordinateur de transfert (2) alors qu'une détection d'erreur est effectuée.

11. Appareil d'enregistrement d'informations selon la revendication 10, dans lequel ledit moyen de détection d'erreur (10) arrête l'enregistrement par ledit moyen d'enregistrement lorsqu'une erreur est détectée.

12. Appareil d'enregistrement d'informations selon la revendication 10, dans lequel ledit moyen de détection d'erreur (10) corrige une erreur dans les données lorsque l'erreur est détectée.

13. Appareil d'enregistrement d'informations selon la revendication 10, dans lequel, lorsqu'une erreur est détectée, ledit premier ordinateur de transfert (18) retransfère les données et les codes de détection et de correction d'erreur audit second ordinateur de transfert (2).

14. Appareil d'enregistrement d'informations selon la revendication 10, dans lequel ledit second ordinateur de transfert (2) extrait les données et les codes de détection et de correction d'erreur stockés à l'intérieur tout en effectuant une détection d'erreur et une correction d'erreur.

15. Appareil d'enregistrement d'informations selon la revendication 10, dans lequel ledit second ordinateur de transfert (2) extrait les données et les codes de détection et de correction d'erreur stockés dans celui-ci tout en effectuant une détection d'erreur et une correction d'erreur en utilisant les codes de détection et de correction d'erreur stockés dans celui-ci, et ledit second ordinateur de transfert (2) génère de nouveaux codes de détection et de correction d'erreur qui sont les mêmes que le code à enregistrer sur le support d'enregistrement sur la base des données extraites, et transfère les données extraites et les nouveaux codes de détection et de correction d'erreur générés.
